# EUROPEAN PATENT SPECIFICATION

(11) **EP 3 613 195 B1**
(45) Date of publication and mention of the grant of the patent: **18.09.2024**
(21) Application number: 18816604.5
(22) Date of filing: 30.05.2018
(51) Int. Cl.: H04L 9/40, G06F 21/60, H04L 67/02, H04L 67/1097, G06F 21/62

(54) **CLOUD STORAGE USING ENCRYPTION GATEWAY WITH CERTIFICATE AUTHORITY IDENTIFICATION**
CLOUD-SPEICHER UNTER VERWENDUNG EINES VERSCHLÜSSELUNGSGATEWAYS MIT ZERTIFIKATAUTORITÄTSPRÜFUNG
STOCKAGE SUR LE NUAGE UTILISANT UNE PASSERELLE DE CHIFFREMENT AVEC IDENTIFICATION D'AUTORITÉ DE CERTIFICAT

(30) Priority: 12.06.2017 US 201762518117 P; 28.08.2017 US 201715688743
(43) Date of publication of application: 26.02.2020
(73) Proprietor: Secturion Systems, Inc., Centerville, UT 84014 (US)
(72) Inventor: ANDERSON, Jordan, Centerville, UT 84014 (US); TAKAHASHI, Richard, J., Layton, UT 84040 (US); LITTLE, Sean, North Salt Lake, UT 84054 (US); NOEHRING, Lee, Peoria, AZ 85383 (US)
(74) Representative: Derry, Paul Stefan
(86) International application number: PCT/US2018/035052
(87) International publication number: WO 2018/231519

(56) References cited:
- US-A1- 2007 136 801
- US-A1- 2010 169 645
- US-A1- 2014 195 798
- US-A1- 2017 085 372
- US-A1- 2017 093 587
- US-B2- 8 595 814
- US-B2- 9 380 048
- US-B2- 9 536 103

## Description

### FIELD OF THE TECHNOLOGY

At least some embodiments disclosed herein relate to security processing or storage in general.

### BACKGROUND

Currently, remote cloud and server systems are protected by distributed software based encryption in which each client generates and handles cryptographic keys and encrypts its data before transmission. Distributed encryption (local client to remote server) adds extensive CPU overhead-computing to clients and allows a very wide attack vector. For example, adversaries can penetrate several clients at one time because each individual client uses a software-based encryption that insecurely stores the keys. The adversary illegally accesses (hacks) the client's machine and copies the cryptographic keys undetected. Also, the user of the client machine and the information technology network personnel are potential threats that can copy the cryptographic keys and sell/give to an adversary. A distributed encryption system with hundreds of clients increases the burden of support network personnel to protect the network from both external and internal attackers or threats. Additionally, software encryption is susceptible to malicious hacking and covert modifications.

US 2017/085372 discloses systems and methods to send or write data or file objects to a remote cloud storage or data server using an encryption gateway. In one embodiment, a communication system includes: an encryption gateway configured to receive TLS (or an equivalent security) encrypted data in a payload from a client application, to terminate the client TLS connection, and to extract the payload and encrypt the payload data with keys from the key manager. The encryption gateway establishes a TLS connection and inserts the encrypted-authenticated data into the TLS payload and sends or writes the TLS encrypted data to a remote cloud storage or data server for storage. The system further includes a key manager configured to provide at least one key to the encryption gateway for encryption of the data in the payload.

US 9536103 discloses methods and systems for vendor independent and secure cloud storage distribution and aggregation. According to one embodiment, an application programming interface (API) is provided by a cloud storage gateway device logically interposed between third-party cloud storage platforms and users of an enterprise. The API facilitates storing of files, issuing of search requests against the files and retrieval of content of the files. A file storage policy is assigned to each user, which defines access rights, storage diversity requirements and a type of encryption to be applied to files. Responsive to receiving a request to store a file, (i) searchable encrypted data is created relating to content and/or metadata of the file based on the assigned file storage policy; and (ii) the searchable encrypted data is distributed among the third-party cloud storage platforms based on the storage diversity requirements defined by the assigned file storage policy.

### SUMMARY OF THE DESCRIPTION

The claims define the matter for protection.

Systems and methods to send or write data or a file object to a remote cloud storage or data server using a centralized encryption gateway are described herein. Some embodiments are summarized in this section.

One embodiment replaces a distributed encryption solution for data object storage with a centralized encryption solution, which is more reliable, secure, and manageable and in many cases provides much higher performance.

In one embodiment, a centralized encryption system and centralized key manager is significantly easier to manage and protect than a distributed encryption/key manager system.

In one embodiment, a payload encryption method uses symmetric encryption algorithms with authentication to encrypt or decrypt a payload file object or data. The gateway encrypts the payload (file object or data) using a specific key associated to the client and/or object. The gateway then encrypts the payload to a remote-side transport encryption protocol and sends the encrypted payload to a remote server or cloud server.

Other features will be apparent from the accompanying drawings and from the detailed description which follows.

### BRIEF DESCRIPTION OF THE DRAWINGS

The embodiments are illustrated by way of example and not limitation in the figures of the accompanying drawings in which like references indicate similar elements.
Figure 1 shows a top level diagram of a communication system in one embodiment.
Figure 2 shows detailed TLS (HTTPS) implementation details of one embodiment.
Figure 3 shows detailed TLS (HTTPS)/MACSEC implementation details of one embodiment.
Figure 4 shows detailed MACSEC implementation details of one embodiment.
Figure 5 shows clients and servers using TLS (HTTPS) connections in one embodiment.
Figure 6 shows a TLS (HTTPS) proxy data flow in one embodiment.
Figure 7 shows clients using HTTP and server using TLS (HTTPS) in one embodiment.
Figure 8 shows HTTP client to TLS (HTTPS) server proxy connection data flow in one embodiment.
Figure 9 shows persistent TLS (HTTPS) connections to server in one embodiment.

### DESCRIPTION

The following description and drawings are illustrative and are not to be construed as limiting. Numerous specific details are described to provide a thorough understanding. However, in certain instances, well known or conventional details are not described in order to avoid obscuring the description. References to "one embodiment" or "an embodiment" in the present disclosure are not necessarily references to the same embodiment; and, such references mean at least one.

Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

Described below is a client(s) to cloud or remote server secure communication system that connects from the clients to the gateway to the cloud and/or any remote servers. In one embodiment, the data is double encrypted in transit at 10 Gigabits to 100 Gigabits/second or higher data rates.

As used herein, "HTTPS" is equivalent to HTTP over TLS or SSL (or another equivalent security).

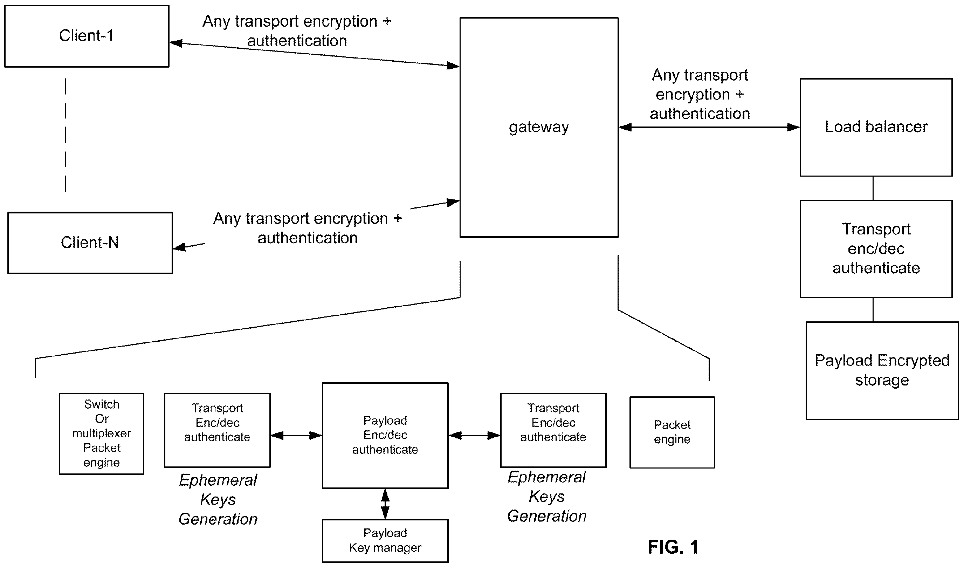

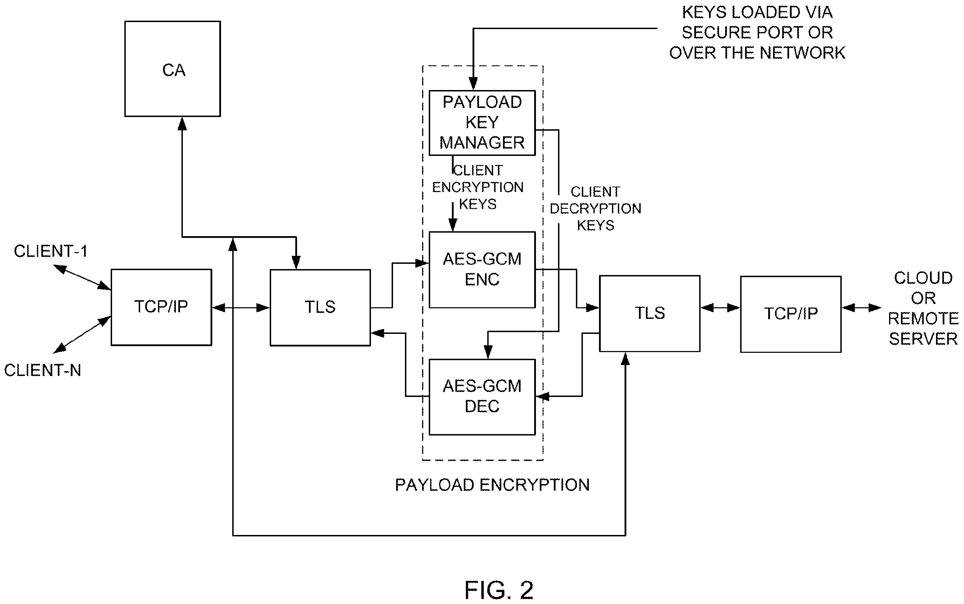

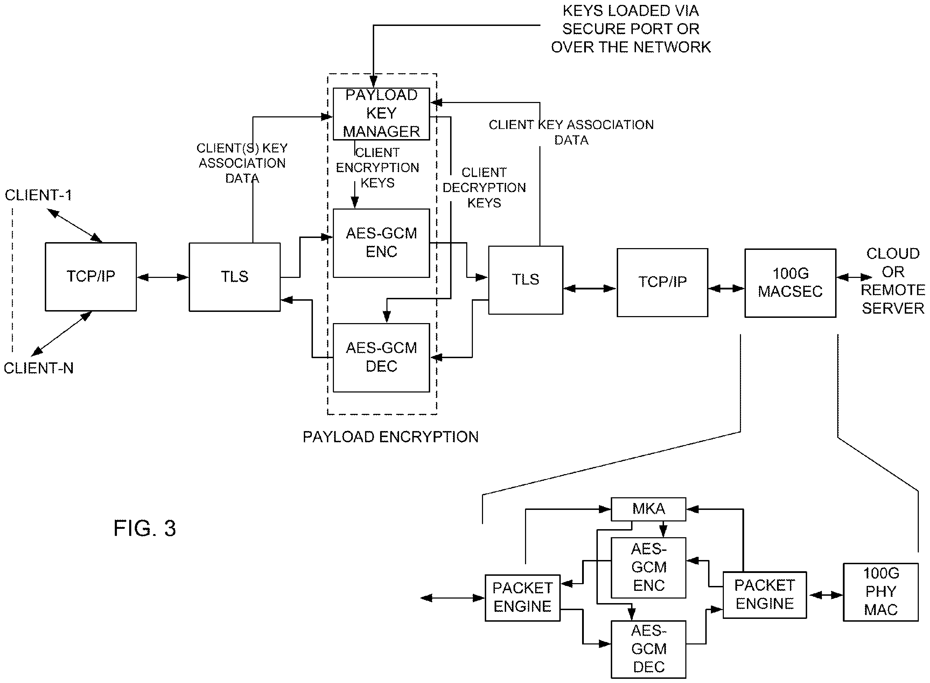

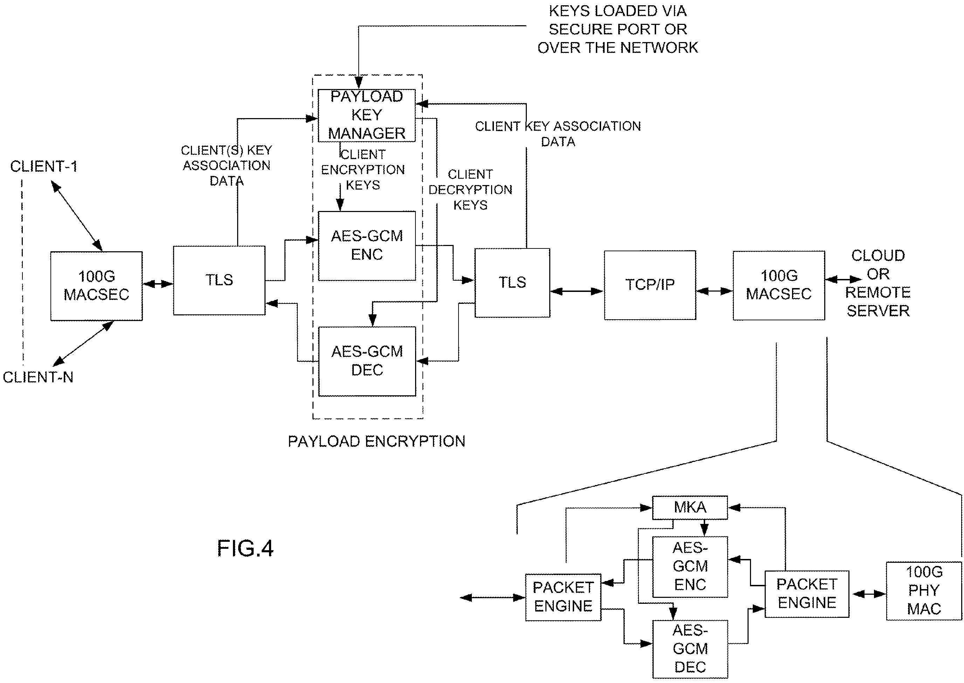

**Figures 1-4** show example embodiments of the communication system. **Figure 1** illustrates an example of the communication system in situ. **Figure 2** illustrates an embodiment of the system with TLS transport security on both local and remote sides of the system. **Figure 3** illustrates an embodiment of the system with TLS transport security on local side and MACSEC transport security on the remote side of the system. **Figure 4** illustrates an embodiment of the system with MACSEC transport security on both local and remote sides of the system.

In some embodiments, as illustrated in **Figures 3** **and** **4****,** MACSEC security is used. MACSEC is described by the IEEE 802.1AE-2006 standard (currently with 3 amendments, IEEE 802.1AEbn-2011, IEEE 802.1AEbw-2013, IEEE 802.1AEcg-2017). The MAC security standard (also known as "MACsec") defines connectionless data confidentiality and integrity for media access independent protocols over an OSI layer two network. The MACsec Key Agreement ("MKA") protocol is responsible for maintaining MACsec connections by generating and providing cryptographic keys to be used for each MACSEC connection. The optional addition of MACSEC adds another layer of transport encryption for cloud-based encryption to completely hide all information being transmitted. Without MACSEC, the TLS encryption still keeps certain data fields in the clear (this is needed information for the TLS protocol to operate). By adding MACSEC security, all of the information transmitted is completed encrypted. Also, in alternative embodiments, MACSEC can be used to provide transport encryption instead of TLS.

### Data flow:

In one embodiment, a local client sends or writes data to the cloud or remote server flow. The client uses any transport encryption method on the file object or data to the gateway. The gateway decrypts the local-side transport to yield the plain text file object or data. The gateway encrypts the payload (file object or data) using a specific key associated to the client and/or object. The gateway then encrypts the payload to the remote-side transport encryption protocol and sends to the remote server or cloud server. The remote server or cloud server decrypts the transport protocol. At this time, the payload is still encrypted by the client's key. The encrypted payload data is then stored. The aggregated gateway terminates local side communication (e.g., MACSEC, IPSEC, TLS), performs encryption as required on the TCP stream of data (e.g., encrypt a file object in a file transfer stream), and then performs new independent transport encryption (e.g., TCP and TLS sessions) on the remote side.

In one embodiment, data is read or the local client receives data from the cloud or remote server. The client requests that the remote server or cloud server reads the encrypted stored data. The remote server or cloud server encrypts the data using remote-side transport protocol. The gateway receives the data and decrypts the remote-side transport protocol. Next, using the client's key, the gateway decrypts the payload file object or data and then encrypts the file object or data using the client-side transport protocol. The client receives the transport data and decrypts. The aggregated gateway terminates remote side communication (e.g., TCP and TLS sessions), performs decryption as required on the TCP stream of data (e.g., encrypt a file object in a file transfer stream), and then performs new independent transport encryption (e.g., MACSEC, IPSEC, TLS) on the local side.

### Transport Encryption:

In one embodiment, the transport encryption method is used to protect the data during transmission between physical sites or buildings (i.e., point-to-point encryption). The transport encryption method can be, for example, an industry standard such as, for example, TLS (Transport Security Layer), IPSec (Internet Protocol Security), MACSEC (IEEE MAC Security standard), or any custom transport protocol. In one embodiment, TLS, MACSEC, and IPSec each have authentication information that will be used to associate the client's payload keys. A Transport Layer Security (TLS) or equivalent network or transport security protocol may communicate to a third party certificate authority (CA) for certificate(s) set-ups and to verify the identity of the cloud or remote server or users.

### Payload encryption:

In one embodiment, the payload encryption method uses symmetric encryption algorithms with authentication (e.g., AES-GCM) to encrypt or decrypt the payload file object or data. In alternative embodiments, other encryption algorithms can be used, such as an asymmetric algorithm. Payload encryption protects the file or object data while it is stored in cloud storage or at the cloud or remote server. Adding authentication ensures that the data has not been manipulated in any way while it has been stored. In addition, the payload encryption provides additional security above and beyond the transport encryption while the data is in transport. Encryption while the data is stored ensures that only the client can access the data. Other entities, such as the storage provider, cannot access, for example, the plaintext data because they do not have keys for that data.

In one embodiment, the symmetric encryption algorithm with authentication is required to associate the proper client's payload key to the file object or data. The payload key manager facilitates the loading of client payload keys into the gateway. The client keys can be either loaded via a secure port or over the network using a secure method. Once the keys are loaded into the gateway, the keys are pre-associated to the clients that are connected to the gateway. The client's key is associated to the client based on the information provided by the transport encryption method. Once the client keys are loaded into the gateway, the client's keys cannot be read or exposed.

The payload key manager (e.g., illustrated in **Figure 2**) communicates with a payload encryption protocol to determine who the client is and what client payload key to associate with the file object or data for payload encryption or decryption. One of the features is the ability to encrypt the payload data at the file object level and associate the client's payload key to the file object.

Some advantages for various embodiments of the above: Implementing this disclosure in hardware using FPGAs or ASIC for, for example, 10 Gigabits to 100 Gigabits/second or higher data rates provides reliability against external attacks on the encryption system. Centralized encryption simplifies user management of site-wide data encryption. High-rate encryption enables remote storage without detriment to user experience. In one embodiment, a cipher or encryption algorithm for the foregoing can be implemented using a systolic matrix architecture as referred to below.

### Additional Encryption Gateway Embodiments

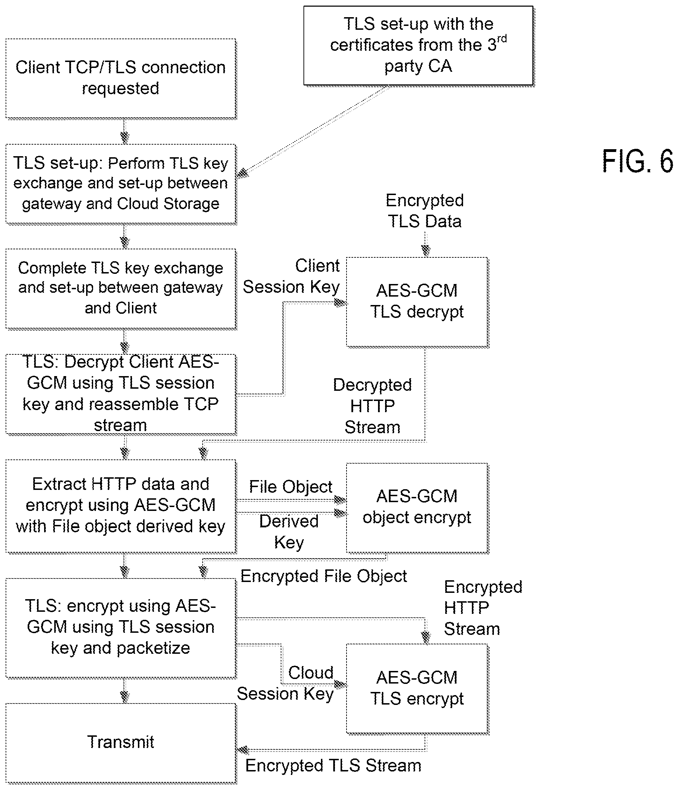

In one embodiment, a first computing device is configured as an encryption gateway, and the first computing device comprises at least one processor (e.g., for data path and/or cryptographic processing) and at least one memory. The encryption gateway is configured to authenticate a client using one or multiple authentication factors, and further configured to receive TLS (or other transport encryption) data from a client application. The encryption gateway will terminate the client TLS connection and extract the payload and encrypt the payload with authentication. Authentication is used in addition to the encryption algorithm to authenticate the data. The authentication process verifies the data originated from the intended source. For example, AES-GCM is an encryption algorithm that includes authentication performed prior to and after an encryption process. This authentication verifies the data that was encrypted or decrypted did originate to/from an authorized source or user. The payload is encrypted using the object/file key (e.g., see "File object derived key" in **Figure 6**). This encryption protects the data while it is stored. The payload is also authenticated so that when the object/file is read from the data store, the gateway can determine if the data was modified in any way including, for example, being tampered with.

Next, the encryption gateway inserts the encrypted-authenticated payload into the cloud or data server TLS data packet/format. The encryption gateway establishes a cloud or data server TLS connection. The cloud or data server terminates the TLS connection, which includes TCP termination, and stores the encrypted-authenticated payload in the cloud or data server memory.

In one embodiment, an approach terminates a client TLS connection which also includes TCP termination, extracts data from a payload and encrypts the extracted data with authentication (using an encryption key from a key manager). A TLS connection is set-up to a cloud or data server, and the encrypted authenticated data is inserted into a TLS cloud payload with key association information. The cloud or data server terminates the TLS connection and the encrypted authenticated payload data is stored on the cloud or data server memory/storage.

This section below describes embodiments regarding a design of a, for example, 100 Gbps (gigabit per second)-full duplex link that uses both data-at-rest encryption and full TLS transport security. The design is not limited to TLS and Cloud Services file encryption, and this description is an example and discussion of the tradeoffs of a single embodiment of the general design. In one embodiment, the TLS algorithm can be implemented using a systolic matrix architecture as referred to below.

TLS background (used in this example) and other transport encryption methods are, for example, IPSEC, MACSEC, or a custom method. In one embodiment, the transport and packet processing can be implemented using a systolic matrix architecture as referred to below.

In one embodiment, Transport Layer Security (TLS) or Secure Socket Layer (SSL) is used to secure data in flight at Layer 6 of the OSI model. It provides both certificate authentication and transport encryption for all application layer data. Certificate authentication is achieved by verifying the CA's cryptographic signature covering the certificate, and/or contacting the CA to ensure that the certificate in question is currently valid. In the context of remote cloud storage, TLS gives the client confidence that its data is only connected to the cloud service provider.

TLS operates by negotiating a session key per TLS or Secure Socket Layer (SSL) connection. A single TLS connection is not a burden, but as the number of TLS connections that are negotiated within a device increases, the connections become increasingly burdensome in both computational requirements and real-time delay.

### IN-LINE ENCRYPTION

### OPTION 1: CLIENTS AND SERVERS USE HTTPS CONNECTIONS

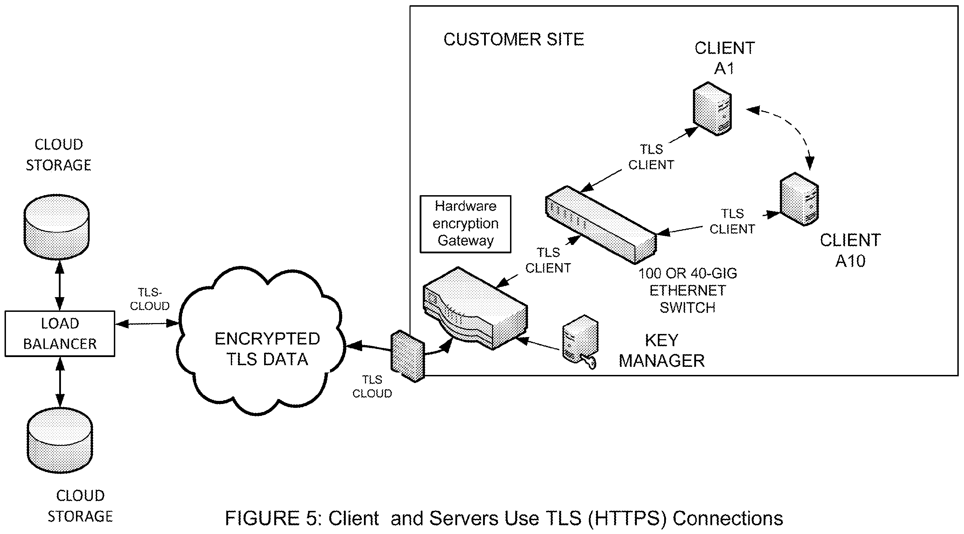

In order to encrypt the HTTP information in-line, the hardware encryption gateway acts as a TLS proxy between client applications and cloud storage as shown in **Figure 5****.**

**Figure 6** shows a flow chart describing the process of decrypting and re-encrypting the TLS connections.

The encryption gateway negotiates a TLS connection to the client and a TLS connection to the cloud server. In one embodiment, part of this negotiation includes exchange of signed certificates. Typically, the gateway provides a certificate to the client, verifying the gateway's identity (but the client does not need to prove its identity to the gateway or the remote server). So, a certificate is not necessarily received by the gateway from the client.

In alternative embodiments, the TLS exchange may start by or include the gateway receiving a certificate from the client. For example, TLS exchanges can implement (and TLS allows for) clients to provide the gateway with a certificate.

The TLS endpoint contacts the CA to verify that the received certificate is valid. In one embodiment, there are two independent TLS exchanges and connections that take place: one TLS exchange between the client and gateway, and another TLS exchange between the server and gateway. So, the gateway provides two TLS endpoints, one on the cloud server side, and one on the client side.

If the CA does not indicate that the certificate is valid, the negotiation is aborted. If the CA indicates the certificate is valid, the TLS protocol will establish the session key and encrypt the data with the session key and transmit the encrypted data to the client and/or cloud server, thus establishing a secure connection.

Before encrypting the file object for data-at-rest, the client TLS encryption will be decrypted using the client session key. In one embodiment, the HTTP data of **Figure 6** contains a file header, which contains information that is used to create the payload encryption key, which is derived using a key encryption key (KEK). For example, the "Derived key" shown in **Figure 6** is the payload encryption key. The file header information stays with the file/object while it is stored and will be available when the file/object is read. When the file/object is read, the file header information is then used to derive the same key (using the KEK) to decrypt the data.

In one embodiment, the file header information is prepended to the file/object. It is not encrypted and provides information which allows the gateway to derive the payload encryption key.

The file object will be encrypted using a key derived from the file object metadata (e.g., an Object ID). After encrypting the file object, the HTTP stream will be TLS encrypted for transport to the cloud server using the cloud session key.

This "Option 1" approach allows both cloud servers and client applications to continue operating transparently, provided the proxy (Hardware Encryption Gateway) is able to provide a valid cloud certificate to the client. In one embodiment, the cloud server provides the gateway with a signed certificate. The gateway must present a separate certificate, optionally signed by a different signing authority. In one embodiment, the proxy cloud certificate is signed by a CA that is trusted by the client so that the client trusts the proxy certificate that is present in place of the original cloud server certificate.

There are two basic CA types: an actual third party CA or a private CA created by the client. Either type is acceptable as long as the CA is trusted by the client and/or cloud server.

If the proxy does not have a valid certificate for the cloud domain, the clients would need to accept the proxy certificate as a security exception.

The cost of Hardware Encryption Gateway using TLS for both the client and the cloud server is that the number of TLS negotiations required has doubled compared to not using a proxy. This can reduce throughput performance for clients due to added TLS negotiation time, especially for small-sized files. This also puts a heavy burden on the proxy (Hardware Encryption Gateway) because it must deal with the aggregate client TLS sessions.

### OPTION 2: CLIENTS USE HTTP, CLOUD STORAGE USES HTTPS

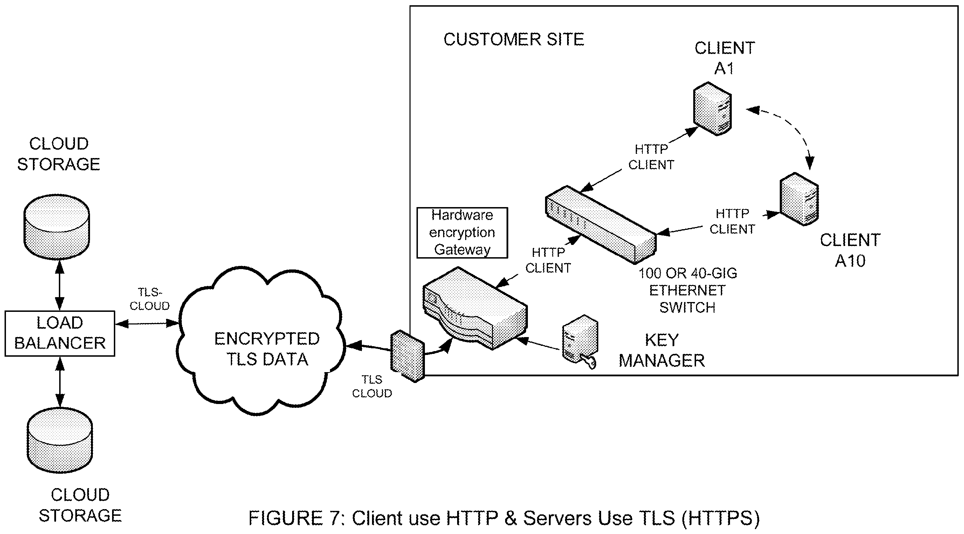

In order to reduce the performance impact of the insertion of the TLS proxy (Hardware Encryption Gateway) and ease the burden on the proxy, we can attempt to reduce the number of TLS connections in the system. One way of doing this is to modify the client connection to use an unencrypted HTTP connection. Because all client-to-proxy connections are contained within the customer site, this is a low risk change to the internal network security as shown in **Figure 7****.**

Because the clients are modified to communicate using HTTP only, Hardware Encryption Gateway would act as a client-only TLS proxy. Hardware Encryption Gateway will modify the client HTTP packets to the HTTPS. This will reduce the number of TLS negotiations in half from the full HTTPS option, and will remove a level of decryption in client-to-proxy traffic and a level of encryption in the proxy-to-client traffic, relieving both client and proxy of that computational burden. Note that this solution may require a change to the client side software.

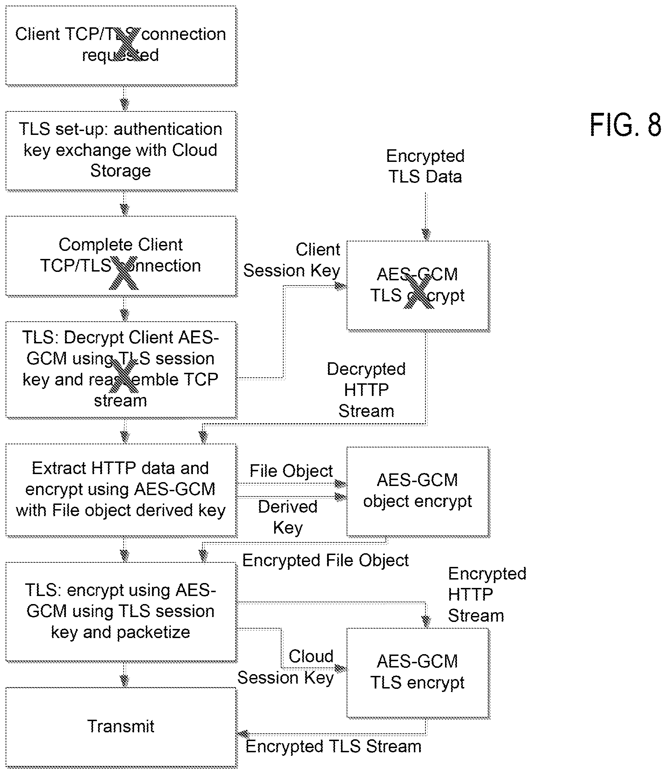

An illustration of the steps saved by removing encryption to the client is in **Figure 8****.**

### OPTION 3: PROXY TO SERVER OPTIMIZATION

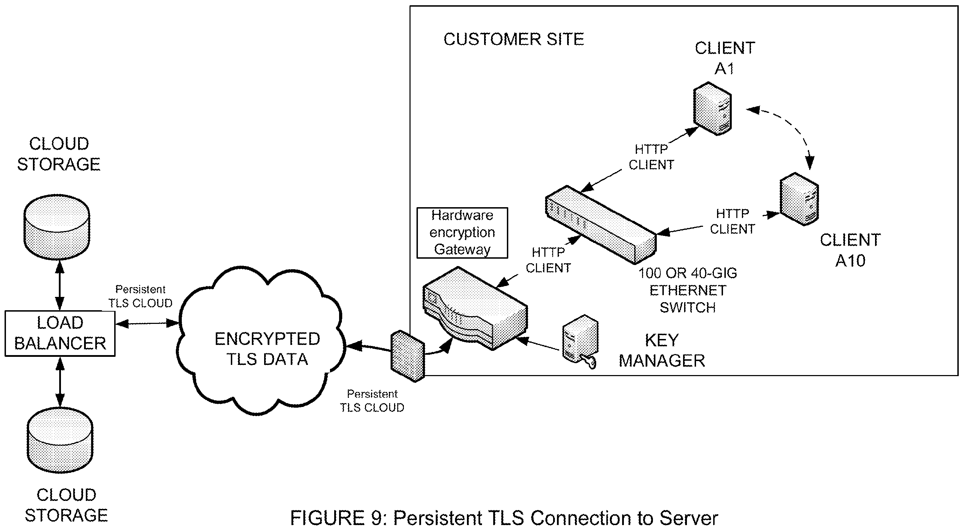

Option 3 outlines potential performance optimizations that could reduce the number of TLS negotiations that are needed between cloud server and proxy from the direct-connect HTTPS network used in both Options 1 and 2. In this optimization, the TLS proxy (Hardware Encryption Gateway) opens and maintains persistent TLS connections to the cloud servers and tunnels the various client connections through those tunnels as shown in **Figure 9****.**

Hardware Encryption Gateway would set up TLS sessions with a cloud server before clients initiate any data transfer. As clients move data to/from the cloud servers, Hardware Encryption Gateway would use a pre-opened TLS session for the client, modifying the client IP address and port number to that of the active TLS session.

In addition, for client-to-server traffic, Hardware Encryption Gateway would insert a TLS header, modify the server TCP port number to HTTPS, and perform all the necessary TLS encryption and authentication. For server-to-client traffic, Hardware Encryption Gateway would reverse the process described above. In one embodiment, there is a need to determine the duration the TLS sessions can be kept alive before the link would need to be renegotiated, as well as on potential impact on the cloud Load Balancers.

This option can be used in combination with either Option 1 or Option 2. In either case, it would reduce the number of proxy-to-server TLS sessions required especially in the case of many short-lived client connections. This option also disassociates the lag of proxy-to-server connections from the client-to-proxy connections so that the client does not see additional latency in individual client connections.

In various embodiments, a general hardware aggregated encryption gateway (as discussed above) enables centralized encryption of communications leaving a corporate or other site. In one embodiment, the above Hardware Encryption Gateway can negotiate hundreds of TLS connections per second and maintain thousands of TCP connections simultaneously. In one embodiment, the Hardware Encryption Gateway is programmable for real-time HTTP 100 Gbps full duplex TLS and data at rest encryption that is transparent to clients and the cloud.

In some embodiments, the encryption gateway may be implemented by or use encryption/decryption and/or communication methods and systems as described in U.S. Patent Application Serial No. 14/177,392, filed February 11, 2014, entitled "SECURITY DEVICE WITH PROGRAMMABLE SYSTOLIC-MATRIX CRYPTOGRAPHIC MODULE AND PROGRAMMABLE INPUT/OUTPUT INTERFACE," by Richard J. Takahashi, and/or as described in U.S. Patent Application Serial No. 14/219,651, filed March 19, 2014, entitled "SECURE END-TO-END COMMUNICATION SYSTEM," by Richard J. Takahashi. For example, the encryption gateway may use systolic matrix packet engines and multiplexers to process and route packets or other data, as described in the foregoing applications.

In one embodiment, data transmitted from a client to a remote cloud storage or server for storage is encrypted using three different keys, described in more detail as follows. The first key (key-1) is set-up with, for example, TLS encryption from the client application to the encryption gateway. The second key is the payload encryption key (key-2) used to encrypt the payload data (e.g., a file, or one or more file objects). The third key (key-3) is used for the TLS encryption from the encryption gateway to the remote cloud storage or server.

In this embodiment, key-1 is used to decrypt data from the client that is received at the gateway, and key-3 is used to encrypt data that is sent to the cloud. Also, key-1 is used as the TLS client session key. Data is only protected by key-1 for the duration of the transport between the client and the gateway. Key-3 is used similarly for the duration of the transport between the gateway and the remote cloud storage or server.

In one embodiment, data is encrypted by the encryption gateway at a file or file object level, and at least one key is associated to a file object. Examples of an executable file include a complete program that can be run directly by an operating system (e.g., in conjunction with shared libraries and system calls). The file generally contains a table of contents, a number of code blocks and data blocks, ancillary data such as the memory addresses at which different blocks should be loaded, which shared libraries are needed, the entry point address, and sometimes a symbol table for debugging. An operating system can run an executable file by loading blocks of code and data into memory at the indicated addresses and jumping to it.

Examples of a file object include code that is logically divided into multiple source files. Each source file is compiled independently into a corresponding object file of partially-formed machine code known as object code. At a later time these object files are linked together to form an executable file. Object files have several features in common with executable files (table of contents, blocks of machine instructions and data, and debugging information). However, the code is not ready to run. For example, it has incomplete references to subroutines outside itself, and as such, many of the machine instructions have only placeholder addresses.

In one embodiment, the encryption gateway sets up a transport session with the remote cloud storage or server prior to receiving the payload from the client (e.g., from an application executing on the client), and the encryption gateway uses the transport session for sending or writing data from a plurality of client applications, including the client application, to the remote cloud storage or server.

In one embodiment, the encryption gateway modifies or inserts a header in a transport connection to associate the client application on a remote connection, or the encryption gateway modifies or inserts a header in a file object to associate the client application on a remote connection.

In one embodiment, the client application can be software that transfers the file or file object to the gateway. In one embodiment, the header is an HTTP packet header that contains the information related to the packet, where the gateway can modify or insert information without disturbing or disrupting the original function of the HTTP packet.

In one embodiment, the data received from the client comprises a payload having a plurality of file objects, and the payload key is associated to each of the file objects. The payload key can be derived using metadata or file header information, as was described above. In either case, the metadata or file header contains information that is used to derive the payload cipher key with a KEK. The metadata or file header is maintained with the file/object for the life of the file/object so that it can be used at any time to derive the payload cipher key to decrypt the file/object (e.g., when it is read from remote cloud storage).

In one embodiment, the data received from the client comprises packets including a first packet, and a header is inserted into one or more of the packets (e.g., the first packet), wherein the header associates each packet to the client. The file object may be split among multiple packets. In the first packet of a file, identifying information is stored that is used to extract the correct key for decryption when the file is later read (this provides key association with the data). This identifying information can be in the form of an additional header prepended to the file, or by modifying existing metadata. The inserted file header is a new header. If metadata is modified, new metadata is inserted in an existing header. In this embodiment, there is no association between the file header or metadata with the remote connection. Internally, the contents of the header/metadata of the first packet of the file creates a context that associates subsequent packets with the first packet.

In one embodiment, the payload key is associated to the client or an object in the data received from the client. The payload key association is made through an identifying feature of the cloud server protocol associated with the cloud or remote server. In Amazon Web Services (AWS), for example, a specific "bucket" (e.g., like a folder) can have a key associated with it. The key to use is identified based on that information and uses that association.

In one embodiment, the gateway receives authentication information from the client to request the local side TLS key using the TLS protocol.

In one embodiment, the gateway communicates with the remote-side transport protocol to determine the remote side TLS key for use in encryption. The TLS protocol is used to determine the key.

In one embodiment, the client session key is an ephemeral key generated after receiving, by the gateway, a request from the client to establish a connection. The cloud session key is an ephemeral key generated after receiving a request from the gateway to the cloud server to establish a connection. Both the client session and cloud session keys are generated in response to a request to the gateway for connection from the client.

In one embodiment, the gateway modifies or inserts a header in at least one of a plurality of packets received from the client to associate the client to a file object (e.g., the header is only inserted in a first packet of a multi-packet file/object).

### Closing

At least some aspects disclosed can be embodied, at least in part, in software. That is, the techniques may be carried out in a computer system or other data processing system in response to its processor(s), such as a microprocessor, executing sequences of instructions contained in a memory, such as ROM, volatile RAM, non-volatile memory, cache or a remote storage device.

In various embodiments, hardwired circuitry (e.g., one or more hardware processors or other computing devices) may be used in combination with software instructions to implement the techniques above (e.g., the communication system may be implemented using one or more computing devices). Thus, the techniques are neither limited to any specific combination of hardware circuitry and software nor to any particular source for the instructions executed by the data processing system.

In one embodiment, a computing device may be used that comprises an inter-connect (e.g., bus and system core logic), which interconnects a microprocessor(s) and a memory. The microprocessor is coupled to cache memory in one example.

The inter-connect interconnects the microprocessor(s) and the memory together and also interconnects them to a display controller and display device and to peripheral devices such as input/output (I/O) devices through an input/output controller(s). Typical I/O devices include mice, keyboards, modems, network interfaces, printers, scanners, video cameras and other devices which are well known in the art.

The inter-connect may include one or more buses connected to one another through various bridges, controllers and/or adapters. In one embodiment the I/O controller includes a USB (Universal Serial Bus) adapter for controlling USB peripherals, and/or an IEEE-1394 bus adapter for controlling IEEE-1394 peripherals.

The memory may include ROM (Read Only Memory), and volatile RAM (Random Access Memory) and non-volatile memory, such as hard drive, flash memory, etc.

Volatile RAM is typically implemented as dynamic RAM (DRAM) which requires power continually in order to refresh or maintain the data in the memory. Non-volatile memory is typically a magnetic hard drive, a magnetic optical drive, or an optical drive (e.g., a DVD RAM), or other type of memory system which maintains data even after power is removed from the system. The non-volatile memory may also be a random access memory.

The non-volatile memory can be a local device coupled directly to the rest of the components in the data processing system. A non-volatile memory that is remote from the system, such as a network storage device coupled to the data processing system through a network interface such as a modem or Ethernet interface, can also be used.

In one embodiment, a data processing system such as the computing device above is used to implement one or more of the following: an encryption gateway, a router, a switch, a key manager, a client application, cloud storage, a load balancer, and a firewall.

In one embodiment, a data processing system such as the computing device above is used to implement a user terminal, which may provide a user interface for control of a computing device. For example, a user interface may permit configuration of the encryption gateway. A user terminal may be in the form of a personal digital assistant (PDA), a cellular phone or other mobile device, a notebook computer or a personal desktop computer.

In some embodiments, one or more servers of the data processing system can be replaced with the service of a peer to peer network of a plurality of data processing systems, or a network of distributed computing systems. The peer to peer network, or a distributed computing system, can be collectively viewed as a server data processing system.

Embodiments of the disclosure can be implemented via the microprocessor(s) and/or the memory above. For example, the functionalities described can be partially implemented via hardware logic in the microprocessor(s) and partially using the instructions stored in the memory. Some embodiments are implemented using the microprocessor(s) without additional instructions stored in the memory. Some embodiments are implemented using the instructions stored in the memory for execution by one or more general purpose microprocessor(s). Thus, the disclosure is not limited to a specific configuration of hardware and/or software.

In this description, various functions and operations may be described as being performed by or caused by software code to simplify description. However, those skilled in the art will recognize what is meant by such expressions is that the functions result from execution of the code by a processor, such as a microprocessor. Alternatively, or in combination, the functions and operations can be implemented using special purpose circuitry, with or without software instructions, such as using an Application-Specific Integrated Circuit (ASIC) or a Field-Programmable Gate Array (FPGA). Embodiments can be implemented using hardwired circuitry without software instructions, or in combination with software instructions. Thus, the techniques are limited neither to any specific combination of hardware circuitry and software, nor to any particular source for the instructions executed by the data processing system.

While some embodiments can be implemented in fully functioning computers and computer systems, various embodiments are capable of being distributed as a computing product in a variety of forms and are capable of being applied regardless of the particular type of machine or computer-readable media used to actually effect the distribution.

At least some aspects disclosed can be embodied, at least in part, in software. That is, the techniques may be carried out in a computer system or other data processing system in response to its processor, such as a microprocessor, executing sequences of instructions contained in a memory, such as ROM, volatile RAM, non-volatile memory, cache or a remote storage device.

Hardware and/or software may be used to implement the embodiments above. The software may be a sequence of instructions referred to as "computer programs." The computer programs typically comprise one or more instructions set at various times in various memory and storage devices in a computer, and that, when read and executed by one or more processors in a computer, cause the computer to perform operations necessary to execute elements involving the various aspects.

Software used in an embodiment may be stored in a machine readable medium. The executable software, when executed by a data processing system, causes the system to perform various methods. The executable software and data may be stored in various places including for example ROM, volatile RAM, non-volatile memory and/or cache. Portions of this software and/or data may be stored in any one of these storage devices. Further, the data and instructions can be obtained from centralized servers or peer to peer networks. Different portions of the data and instructions can be obtained from different centralized servers and/or peer to peer networks at different times and in different communication sessions or in a same communication session. The data and instructions can be obtained in entirety prior to the execution of the applications. Alternatively, portions of the data and instructions can be obtained dynamically, just in time, when needed for execution. Thus, it is not required that the data and instructions be on a machine readable medium in entirety at a particular instance of time.

Examples of computer-readable media include but are not limited to recordable and non-recordable type media such as volatile and non-volatile memory devices, read only memory (ROM), random access memory (RAM), flash memory devices, floppy and other removable disks, magnetic disk storage media, optical storage media (e.g., Compact Disk Read-Only Memory (CD ROMS), Digital Versatile Disks (DVDs), etc.), among others. The computer-readable media may store the instructions.

In general, a tangible machine readable medium includes any mechanism that provides (e.g., stores) information in a form accessible by a machine (e.g., a computer, network device, personal digital assistant, manufacturing tool, any device with a set of one or more processors, etc.).

Although some of the drawings may illustrate a number of operations in a particular order, operations which are not order dependent may be reordered and other operations may be combined or broken out. While some reordering or other groupings are specifically mentioned, others will be apparent to those of ordinary skill in the art and so do not present an exhaustive list of alternatives. Moreover, it should be recognized that various stages or components could be implemented in hardware, firmware, software or any combination thereof.

Benefits, other advantages, and solutions to problems have been described herein with regard to specific embodiments. However, the benefits, advantages, solutions to problems, and any elements that may cause any benefit, advantage, or solution to occur or become more pronounced are not to be construed as critical, required, or essential features or elements of the disclosure.

In the foregoing specification, the disclosure has been described with reference to specific exemplary embodiments thereof. It will be evident that various modifications may be made thereto without departing from the scope of the claims. The specification and drawings are, accordingly, to be regarded in an illustrative sense rather than a restrictive sense.

## Claims

1. A system, comprising:
at least one processor of a gateway; and
memory storing instructions configured to instruct the at least one processor to:
provide a first certificate to a client for an authentication by the client, wherein the client is configured to authenticate the first certificate prior to sending data to the gateway;
receive a second certificate from the client;
contact a certificate authority to authenticate the second certificate;
in response to authentication of the first and second certificates, establish a connection to the client using a first key;
after the connection is established, receive data, from the client, using a first transport protocol;
decrypt, using the first key, the received data to provide first decrypted data;
encrypt, using a second key, the first decrypted data to provide first encrypted data;
encrypt, using a third key, the first encrypted data using a second transport protocol to provide second encrypted data; and
send the second encrypted data to a cloud storage or server.

2. The system of claim 1, wherein the data received from the client comprises a payload having a plurality of file objects, and the second key is associated to each of the file objects.

3. The system of claim 1, wherein the instructions are further configured to instruct the at least one processor to set up the first transport protocol using at least one certificate received from the certificate authority, wherein the at least one certificate is verified prior to establishing a connection to the client using the first transport protocol.

4. The system of claim 1, wherein the first key is a client session key, the second key is a payload key provided by a key manager, the third key is a cloud session key, and the instructions are further configured to instruct the at least one processor to:
receive, from the cloud storage or server, using a transport protocol, the second encrypted data;
decrypt, using the payload key, the second encrypted data to provide second decrypted data; and
send, to the client, using a transport protocol, the second decrypted data.

5. The system of claim 1, wherein the first key is a client session key, the third key is a cloud session key, and the client session key and cloud session key are generated after verifying the identity of at least one of the client or the cloud storage or server, and wherein the verifying includes receiving at least one certificate from the certificate authority.

6. The system of claim 1, wherein the second key is associated to the client or an object in the data received from the client, and wherein the second key association is made through an identifying feature of a protocol associated with the cloud storage or server.

7. A system, comprising:
at least one memory to store a payload key associated to a first client of a plurality of clients; and
a computing device configured to communicate with the first client using a client-side transport protocol, and to communicate with a cloud storage or server using a remote-side transport protocol, wherein the computing device is further configured to:
provide a first certificate to the first client for authentication by the first client;
receive a second certificate from the first client;
contact a certificate authority to authenticate the second certificate;
in response to authentication of the first and second certificates, establish a connection to the first client using a client session key;
receive, over the connection, data from the first client;
decrypt, using the client session key, the received data to provide first decrypted data;
encrypt the first decrypted data using the payload key to provide first encrypted data;
encrypt, using a cloud session key, the first encrypted data using the remote-side transport protocol to provide second encrypted data; and
send the second encrypted data to the cloud storage or server.

8. The system of claim 7, wherein the computing device is further configured to receive authentication information from the first client to request the client session key using a TLS protocol.

9. The system of claim 7, wherein the computing device uses symmetric encryption to encrypt the first decrypted data using the payload key.

10. The system of claim 7, wherein the payload key is associated to the first client prior to receiving the data from the first client, the computing device is further configured to communicate with the other clients of the plurality of clients, and the at least one memory stores additional payload keys, each additional key associated with a respective one of the other clients.

11. The system of claim 7, wherein the computing device is further configured to communicate with the remote-side transport protocol to determine the cloud session key for use in encryption.

12. The system of claim 7, wherein in response to a request for connection received by the computing device from the first client, the client session key and the cloud session key are generated.

13. The system of claim 7, wherein the computing device is further configured to set up a transport session with the cloud storage or server prior to receiving the data from the first client, and the transport session is used for sending data from each of the plurality of clients, including the first client, to the cloud storage or server.

14. The system of claim 7, wherein the computing device is further configured to modify or insert a header in a first packet of a plurality of packets received from the first client to associate the first client to a file or object.

15. A method, comprising:
storing, in a memory of a computing device, a payload key associated to a first client of a plurality of clients, the first client communicating with the computing device using a client-side transport protocol;
providing, by the computing device, a first certificate to a cloud storage for authentication;
receiving, by the computing device, a second certificate from the cloud storage;
contacting, by the computing device, a certificate authority to authenticate the second certificate;
receiving, by the computing device from the first client, a first request to read data from the cloud storage, the cloud storage communicating with the computing device using a remote-side transport protocol;
in response to the first request and authentication of the first and second certificates, sending, by the computing device, a second request to the cloud storage for the data;
in response to the second request, receiving, by the computing device, the data from the cloud storage, wherein the data has been encrypted using the remote-side transport protocol;
decrypting, by at least one processor of the computing device, the received data from the cloud storage using the remote-side transport protocol to provide first decrypted data;
decrypting, by the computing device, the first decrypted data using the payload key to provide second decrypted data, wherein the payload key is retrieved from the memory;
encrypting, by the computing device, the second decrypted data using the client-side transport protocol to provide first encrypted data; and
sending, from the computing device to the first client, the first encrypted data.

## Patentansprüche

1. System, umfassend:
mindestens einen Prozessor eines Gateways; und
einen Speicher, der Anweisungen speichert, die so konfiguriert sind, dass sie den mindestens einen Prozessor zu Folgendem anweisen: Bereitstellen eines ersten Zertifikats für einen Client für eine Authentifizierung durch den Client, wobei der Client so konfiguriert ist, dass er das erste Zertifikat authentifiziert, bevor er Daten an das Gateway sendet;
Empfangen eines zweiten Zertifikats vom Client;
Kontaktieren einer Zertifikatautorität, um das zweite Zertifikat zu authentifizieren;
als Reaktion auf die Authentifizierung des ersten und zweiten Zertifikats Herstellen einer Verbindung zum Client unter Verwendung eines ersten Schlüssels,
nachdem die Verbindung hergestellt wurde, Empfangen von Daten vom Client unter Verwendung eines ersten Transportprotokolls,
Entschlüsseln, unter Verwendung des ersten Schlüssels, der empfangenen Daten, um erste entschlüsselte Daten bereitzustellen;
Verschlüsseln, unter Verwendung eines zweiten Schlüssels, der ersten entschlüsselten Daten, um erste verschlüsselte Daten bereitzustellen;
Verschlüsseln, unter Verwendung eines dritten Schlüssels, der ersten verschlüsselten Daten unter Verwendung eines zweiten Transportprotokolls, um zweite verschlüsselte Daten bereitzustellen; und
Senden der zweiten verschlüsselten Daten an einen Cloud-Speicher oder -Server.

2. System nach Anspruch 1, wobei die vom Client empfangenen Daten Nutzdaten mit einer Vielzahl von Dateiobj ekten umfassen und der zweite Schlüssel jedem der Dateiobj ekte zugeordnet ist.

3. System nach Anspruch 1, wobei die Anweisungen ferner so konfiguriert sind, dass sie den mindestens einen Prozessor anweisen, das erste Transportprotokoll unter Verwendung von mindestens einem von der Zertifikatautorität empfangenen Zertifikat einzurichten, wobei das mindestens eine Zertifikat überprüft wird, bevor eine Verbindung mit dem Client unter Verwendung des ersten Transportprotokolls hergestellt wird.

4. System nach Anspruch 1, wobei der erste Schlüssel ein Client-Sitzungsschlüssel ist, der zweite Schlüssel ein von einem Schlüsselmanager bereitgestellter Nutzdaten-Schlüssel ist, der dritte Schlüssel ein Cloud-Sitzungsschlüssel ist und die Anweisungen ferner so konfiguriert sind, dass sie den mindestens einen Prozessor zu Folgendem anweisen:
Empfangen, vom Cloud-Speicher oder -Server unter Verwendung eines Transportprotokolls, der zweiten verschlüsselten Daten,
Entschlüsseln, unter Verwendung des Nutzdaten-Schlüssels, der zweiten verschlüsselten Daten, um zweite entschlüsselte Daten bereitzustellen; und
Senden, unter Verwendung eines Transportprotokolls, der zweiten entschlüsselten Daten an den Client.

5. System nach Anspruch 1, wobei der erste Schlüssel ein Client-Sitzungsschlüssel ist, der dritte Schlüssel ein Cloud-Sitzungsschlüssel ist und der Client-Sitzungsschlüssel und der Cloud-Sitzungsschlüssel nach dem Überprüfen der Identität von mindestens einem von dem Client oder dem Cloud-Speicher oder -Server generiert werden, und wobei das Überprüfen das Empfangen von mindestens einem Zertifikat von der Zertifikatautorität einschließt.

6. System nach Anspruch 1, wobei der zweite Schlüssel dem Client oder einem Objekt in den vom Client empfangenen Daten zugeordnet ist und wobei die Zuordnung des zweiten Schlüssels über ein Identifizierungsmerkmal eines dem Cloud-Speicher oder -Server zugeordneten Protokolls erfolgt.

7. System, umfassend:
mindestens einen Speicher zum Speichern eines Nutzdaten-Schlüssels, der einem ersten Client einer Vielzahl von Clients zugeordnet ist, und
ein Computergerät, das so konfiguriert ist, dass es mit dem ersten Client unter Verwendung eines clientseitigen Transportprotokolls kommuniziert und mit einem Cloud-Speicher oder -Server unter Verwendung eines remoteseitigen Transportprotokolls kommuniziert, wobei das Computergerät ferner konfiguriert zum:
Bereitstellen eines ersten Zertifikats für den ersten Client zur Authentifizierung durch den ersten Client;
Empfangen eines zweiten Zertifikats vom ersten Client;
Kontaktieren einer Zertifikatautorität, um das zweite Zertifikat zu authentifizieren;
als Reaktion auf die Authentifizierung des ersten und zweiten Zertifikats Herstellen einer Verbindung zum ersten Client unter Verwendung eines Client-Sitzungsschlüssels,
Empfangen, über die Verbindung, von Daten vom ersten Client;
Entschlüsseln, unter Verwendung des Client-Sitzungsschlüssels, der empfangenen Daten, um erste entschlüsselte Daten bereitzustellen;
Verschlüsseln der ersten entschlüsselten Daten unter Verwendung des Nutzdaten-Schlüssels, um erste verschlüsselte Daten bereitzustellen;
Verschlüsseln, unter Verwendung eines Cloud-Sitzungsschlüssels, der ersten verschlüsselten Daten unter Verwendung des remoteseitigen Transportprotokolls, um zweite verschlüsselte Daten bereitzustellen; und
Senden der zweiten verschlüsselten Daten an den Cloud-Speicher oder -Server.

8. System nach Anspruch 7, wobei das Computergerät ferner so konfiguriert ist, dass es Authentifizierungsinformationen vom ersten Client empfängt, um den Client-Sitzungsschlüssel unter Verwendung eines TLS-Protokolls anzufordern.

9. System nach Anspruch 7, wobei das Computergerät symmetrische Verschlüsselung verwendet, um die ersten entschlüsselten Daten unter Verwendung des Nutzdaten-Schlüssels zu verschlüsseln.

10. System nach Anspruch 7, wobei der Nutzdaten-Schlüssel dem ersten Client zugeordnet wird, bevor die Daten vom ersten Client empfangen werden, wobei das Computergerät ferner so konfiguriert ist, dass es mit den anderen Clients der Vielzahl von Clients kommuniziert, und wobei der mindestens eine Speicher zusätzliche Nutzdaten-Schlüssel speichert, wobei jeder zusätzliche Schlüssel einem jeweiligen der anderen Clients zugeordnet ist.

11. System nach Anspruch 7, wobei das Computergerät ferner so konfiguriert ist, dass es mit dem remoteseitigen Transportprotokoll kommuniziert, um den Cloud-Sitzungsschlüssel zur Verwendung bei der Verschlüsselung zu bestimmen.

12. System nach Anspruch 7, wobei als Reaktion auf eine vom Computergerät empfangene Verbindungsanforderung vom ersten Client der Client-Sitzungsschlüssel und der Cloud-Sitzungsschlüssel generiert werden.

13. System nach Anspruch 7, wobei das Computergerät ferner so konfiguriert ist, dass es vor dem Empfangen der Daten vom ersten Client eine Transportsitzung mit dem Cloud-Speicher oder -Server einrichtet, und die Transportsitzung zum Senden von Daten von jedem der Vielzahl von Clients, einschließlich des ersten Clients, an den Cloud-Speicher oder -Server verwendet wird.

14. System nach Anspruch 7, wobei das Computergerät ferner so konfiguriert ist, dass es einen Header in einem ersten Paket einer Vielzahl von Paketen, die vom ersten Client empfangen werden, ändert oder einfügt, um den ersten Client einer Datei oder einem Objekt zuzuordnen.

15. Verfahren, umfassend:
Speichern, in einem Speicher eines Computergeräts, eines Nutzdaten-Schlüssels, der einem ersten Client einer Vielzahl von Clients zugeordnet ist, wobei der erste Client mit dem Computergerät unter Verwendung eines clientseitigen Transportprotokolls kommuniziert,
Bereitstellen, durch das Computergerät, eines ersten Zertifikats für einen Cloud-Speicher zur Authentifizierung;
Empfangen, durch das Computergerät, eines zweiten Zertifikats vom Cloud-Speicher, Kontaktieren, durch das Computergerät, einer Zertifikatautorität zum Authentifizieren des zweiten Zertifikats;
Empfangen, durch das Computergerät vom ersten Client, einer ersten Anforderung zum Lesen von Daten aus dem Cloud-Speicher, wobei der Cloud-Speicher mit dem Computergerät unter Verwendung eines remoteseitigen Transportprotokolls kommuniziert,
als Reaktion auf die erste Anforderung und Authentifizierung des ersten und zweiten Zertifikats Senden, durch das Computergerät, einer zweiten Anforderung für die Daten an den Cloud-Speicher,
als Reaktion auf die zweite Anforderung Empfangen, durch das Computergerät, der Daten vom Cloud-Speicher, wobei die Daten unter Verwendung des remoteseitigen Transportprotokolls verschlüsselt worden sind,
Entschlüsseln, durch mindestens einen Prozessor des Computergeräts, der empfangenen Daten vom Cloud-Speicher unter Verwendung des remoteseitigen Transportprotokolls, um erste entschlüsselte Daten bereitzustellen;
Entschlüsseln, durch das Computergerät, der ersten entschlüsselten Daten unter Verwendung des Nutzdaten-Schlüssels, um zweite entschlüsselte Daten bereitzustellen, wobei der Nutzdaten-Schlüssel aus dem Speicher abgerufen wird,
Verschlüsseln, durch das Computergerät, der zweiten entschlüsselten Daten unter Verwendung des clientseitigen Transportprotokolls, um erste verschlüsselte Daten bereitzustellen; und
Senden der ersten verschlüsselten Daten vom Computergerät an den ersten Client.

## Revendications

1. Système, comprenant :
au moins un processeur d'une passerelle ; et
des instructions de stockage en mémoire configurées pour ordonner à l'au moins un processeur de :
fournir un premier certificat à un client pour une authentification par le client, dans lequel le client est configuré pour authentifier le premier certificat avant d'envoyer des données à la passerelle ;
recevoir un deuxième certificat du client ;
contacter une autorité de certificat pour authentifier le deuxième certificat ;
en réponse à l'authentification des premier et deuxième certificats, établir une connexion avec le client à l'aide d'une première clé ;
une fois la connexion établie, recevoir des données, en provenance du client, en utilisant un premier protocole de transport ;
déchiffrer, à l'aide de la première clé, les données reçues pour fournir des premières données déchiffrées ;
chiffrer, à l'aide d'une deuxième clé, les premières données déchiffrées pour fournir des premières données chiffrées ;
chiffrer, à l'aide d'une troisième clé, les premières données chiffrées en utilisant un deuxième protocole de transport pour fournir des deuxièmes données chiffrées ; et
envoyer les deuxièmes données chiffrées à un stockage ou serveur sur le nuage.

2. Système selon la revendication 1, dans lequel les données reçues du client comprennent une charge utile ayant une pluralité d'objets fichier, et la deuxième clé est associée à chacun des objets fichier.

3. Système selon la revendication 1, dans lequel les instructions sont en outre configurées pour ordonner à l'au moins un processeur d'établir le premier protocole de transport en utilisant au moins un certificat reçu de l'autorité de certificat, dans lequel l'au moins un certificat est vérifié avant d'établir une connexion au client en utilisant le premier protocole de transport.

4. Système selon la revendication 1, dans lequel la première clé est une clé de session client, la deuxième clé est une clé de charge utile fournie par un gestionnaire de clés, la troisième clé est une clé de session sur le nuage, et les instructions sont en outre configurées pour ordonner à l'au moins un processeur de :
recevoir, depuis le stockage ou serveur sur le nuage, en utilisant un protocole de transport, les deuxièmes données chiffrées ;
déchiffrer, à l'aide de la clé de charge utile, les deuxièmes données chiffrées pour fournir des deuxièmes données déchiffrées ; et
envoyer, au client, en utilisant un protocole de transport, les deuxièmes données déchiffrées.

5. Système selon la revendication 1, dans lequel la première clé est une clé de session client, la troisième clé est une clé de session sur le nuage, et la clé de session client et la clé de session sur le nuage sont générées après vérification de l'identité d'au moins l'un du client ou du stockage ou serveur sur le nuage, et dans lequel la vérification comprend la réception d'au moins un certificat de l'autorité de certificat.

6. Système selon la revendication 1, dans lequel la deuxième clé est associée au client ou à un objet dans les données reçues du client, et dans lequel la deuxième association de clé est effectuée via une caractéristique d'identification d'un protocole associé au stockage ou serveur sur le nuage.

7. Système, comprenant :
au moins une mémoire destinée à stocker une clé de charge utile associée à un premier client parmi une pluralité de clients ; et
un dispositif informatique configuré pour communiquer avec le premier client en utilisant un protocole de transport côté client, et pour communiquer avec un stockage ou serveur sur le nuage en utilisant un protocole de transport côté distant, dans lequel le dispositif informatique est en outre configuré pour :
fournir un premier certificat au premier client pour authentification par le premier client ;
recevoir un deuxième certificat du premier client ;
contacter une autorité de certificat pour authentifier le deuxième certificat ;
en réponse à l'authentification des premier et deuxième certificats, établir une connexion avec le premier client à l'aide d'une clé de session client ;
recevoir, via la connexion, des données du premier client ;
déchiffrer, à l'aide de la clé de session client, les données reçues pour fournir des premières données déchiffrées ;
chiffrer les premières données déchiffrées à l'aide de la clé de charge utile pour fournir des premières données chiffrées ;
chiffrer, à l'aide d'une clé de session sur le nuage, les premières données chiffrées en utilisant le protocole de transport côté distant pour fournir des deuxièmes données chiffrées ; et
envoyer les deuxièmes données chiffrées au stockage ou serveur sur le nuage.

8. Système selon la revendication 7, dans lequel le dispositif informatique est en outre configuré pour recevoir des informations d'authentification du premier client pour demander la clé de session client en utilisant un protocole TLS.

9. Système selon la revendication 7, dans lequel le dispositif informatique utilise un chiffrement symétrique pour chiffrer les premières données déchiffrées à l'aide de la clé de charge utile.

10. Système selon la revendication 7, dans lequel la clé de charge utile est associée au premier client avant de recevoir les données du premier client, le dispositif informatique est en outre configuré pour communiquer avec les autres clients de la pluralité de clients, et l'au moins une mémoire stocke des clés de charge utile supplémentaires, chaque clé supplémentaire étant associée à l'un respectif des autres clients.

11. Système selon la revendication 7, dans lequel le dispositif informatique est en outre configuré pour communiquer avec le protocole de transport côté distant afin de déterminer la clé de session sur le nuage à utiliser dans le chiffrement.

12. Système selon la revendication 7, dans lequel en réponse à une demande de connexion reçue par le dispositif informatique en provenance du premier client, la clé de session client et la clé de session sur le nuage sont générées.

13. Système selon la revendication 7, dans lequel le dispositif informatique est en outre configuré pour établir une session de transport avec le stockage ou serveur sur le nuage avant de recevoir les données en provenance du premier client, et la session de transport est utilisée pour envoyer des données en provenance de chacun de la pluralité de clients, y compris le premier client, au stockage ou serveur sur le nuage.

14. Système selon la revendication 7, dans lequel le dispositif informatique est en outre configuré pour modifier ou insérer un en-tête dans un premier paquet d'une pluralité de paquets reçus du premier client pour associer le premier client à un fichier ou un objet.

15. Procédé, comprenant :
le stockage, dans une mémoire d'un dispositif informatique, d'une clé de charge utile associée à un premier client parmi une pluralité de clients, le premier client communiquant avec le dispositif informatique en utilisant un protocole de transport côté client ;
la fourniture, par le dispositif informatique, d'un premier certificat à un stockage sur le nuage pour authentification ;
la réception, par le dispositif informatique, d'un deuxième certificat en provenance du stockage sur le nuage ;
le contact, par le dispositif informatique, d'une autorité de certificat pour authentifier le deuxième certificat ;
la réception, par le dispositif informatique, en provenance du premier client, d'une première demande de lecture de données à partir du stockage sur le nuage, le stockage sur le nuage communiquant avec le dispositif informatique en utilisant un protocole de transport côté distant ;
en réponse à la première demande et à l'authentification des premier et deuxième certificats, l'envoi, par le dispositif informatique, d'une deuxième demande au stockage sur le nuage pour les données ;
en réponse à la deuxième demande, la réception, par le dispositif informatique, des données en provenance du stockage sur le nuage, dans lequel les données ont été chiffrées en utilisant le protocole de transport côté distant ;
le déchiffrement, par au moins un processeur du dispositif informatique, des données reçues en provenance du stockage sur le nuage en utilisant le protocole de transport côté distant pour fournir des premières données déchiffrées ;
le déchiffrement, par le dispositif informatique, des premières données déchiffrées à l'aide de la clé de charge utile pour fournir des deuxièmes données déchiffrées, dans lequel la clé de charge utile est récupérée de la mémoire ;
le chiffrement, par le dispositif informatique, des deuxièmes données déchiffrées en utilisant le protocole de transport côté client pour fournir des premières données chiffrées ; et
l'envoi, du dispositif informatique au premier client, des premières données chiffrées.
